# EUROPÄISCHE PATENTSCHRIFT

(11) **EP 2 776 305 B1**
(45) Veröffentlichungstag und Bekanntmachung des Hinweises auf die Patenterteilung: **30.08.2017**
(21) Anmeldenummer: 12790406.8
(22) Anmeldetag: 06.11.2012
(51) Int. Cl.: B62D 55/24

(54) **GLEISKETTE ODER GLEISKETTENSEGMENT**
CRAWLER TRACK OR CRAWLER TRACK SEGMENT
CHENILLE OU SEGMENT DE CHENILLE

(30) Priorität: 12.11.2011 DE 102011118421
(43) Veröffentlichungstag der Anmeldung: 17.09.2014
(73) Patentinhaber: DST Defence Service Tracks GmbH, 66629 Freisen (DE)
(72) Erfinder: DELISLE, Marc, QC Can J1X 1M3 (CA)
(74) Vertreter: Feder Walter Ebert
(86) Internationale Anmeldenummer: PCT/EP2012/004619
(87) Internationale Veröffentlichungsnummer: WO 2013/068098

(56) Entgegenhaltungen:
- WO-A1-2011/045993
- GB-A- 2 410 729
- US-A- 3 118 709
- US-A- 3 515 443

## Beschreibung

Die Erfindung betrifft eine Gleiskette für ein Gleiskettenfahrzeug gemäß dem Oberbegriff des Anspruchs 1. Eine solche Gleiskette ist aus der DE 602 19 697 T2 bekannt.

Die Gleiskette der DE 602 19 697 T2 weist auf der Mittellängsachse ihrer inneren Radkontaktseite eine Vielzahl hintereinander angeordneter Führungshörner auf. Diese Führungshörner bilden einen quasi kontinuierlichen Wall, der in die im Antriebsrad, im Spannrad und in den Laufrädern ausgebildeten Hohlkehlen passt. Die Passung der Führungshörner zu den Hohlkehlen ermöglicht es, die Gleiskette während der Bewegung des Gleiskettenfahrzeugs zu führen. Ferner weist die Gleiskette der DE 60219697 T2 eine Vielzahl von Vorsprüngen auf, die als Traktionsnasen bezeichnet werden und entlang jeder Seite der Gleiskette angeordnet sind. Diese Traktionsnasen sind so konzipiert, dass sie passend in entsprechende Hohlräume im Antriebsrad eingreifen. Sie gewährleisten so die Kraftübertragung vom Motor des Gleiskettenfahrzeugs auf die Gleiskette. Zwischen den Führungshörnern und den Traktionsnasen befindet sich eine ebene Lauffläche, auf welcher die Laufräder des Gleiskettenfahrzeugs laufen und das Gewicht des Gleiskettenfahrzeugs abstützen.

Auch wenn diese Gleiskette gut funktioniert, so hat sie jedoch den Nachteil, dass sie relativ schwer ist und aufgrund ihrer hohen Massenträgheit die Agilität des Gleiskettenfahrzeugs mindert.

Die WO 2011/045993 A1 offenbart eine Gleiskette und Gleiskettensegmente, für ein Gleiskettenfahrzeug, welche oder welches geeignet ist, über ein Antriebsrad und über Laufräder zu laufen, wobei die Gleiskette oder das Gleiskettensegment eine äußere Bodenkontaktseite und eine innere Radkontaktseite aufweist, wobei die innere Radkontaktseite eine Fläche aufweist, aus der mehrere Führungshörner zur Führung der Gleiskette oder des Gleiskettensegments während der Bewegung des Gleiskettenfahrzeugs herausragen, wobei zumindest Teile der ebenen Fläche als Lauffläche für die Laufräder dienen, wobei in der ebenen Fläche Vertiefungen für den Eingriff von Antriebsnasen des Antriebsrades vorgesehen sind, wobei die Gleiskette oder das Gleiskettensegment Vertiefungen aufweisen, welche von der Radkontaktseite nicht bis zur Bodenkontaktseite durchdringen, wobei diese Vertiefungen die Form von Kanälen aufweisen, welche senkrecht zur Längsachse der Gleiskette oder des Gleiskettensegments orientiert sind.

Es ist daher Aufgabe der vorliegenden Erfindung, eine Gleiskette bereitzustellen, bei welcher die oben beschriebenen Nachteile beseitigt oder zumindest gemindert sind.

Diese Aufgabe wird durch eine Gleiskette oder ein Gleiskettensegment gemäß Anspruch 1 gelöst. Vorteilhafte Ausführungsformen dieser Gleiskette oder dieses Gleiskettensegments sind in den Unteransprüchen angegeben.

Die vorliegende Erfindung bezieht sich sowohl auf eine Gleiskette als auch auf ein Gleiskettensegment. Das bedeutet, dass alle nachstehend beschriebenen Merkmale und Eigenschaften sowohl auf eine endlose, in sich geschlossene Gleiskette als auch auf ein Gleiskettensegment einer segmentierbaren Gleiskette angewandt werden können. Zur leichteren Lesbarkeit wird im Folgenden nur auf die Ausführung bei einer Gleiskette eingegangen, was nicht bedeuten soll, dass diese Ausführungsformen nicht auch bei einem Gleiskettensegment angewandt werden können.

Erfindungsgemäß sind in der ebenen Fläche auf der inneren Radkontaktseite der Gleiskette oder des Gleiskettensegments Vertiefungen für den Eingriff von Antriebsnasen des Antriebsrades vorgesehen. Dadurch kann auf die im Stand der Technik bisher üblichen Traktionsnasen verzichtet werden. Dies führt gegenüber dem Stand der Technik zu einer Gewichtseinsparung und damit zu einer leichteren, agileren Kette, welche daher leichter beschleunigt werden kann. Gerade beim Anfahren und beim Abbremsen des Gleiskettenfahrzeugs stellt dies einen großen Vorteil gegenüber einer konventionellen Gleiskette mit Traktionsnasen dar.

Gemäß einer bevorzugten Ausführungsform der vorliegenden Erfindung weist die Gleiskette Vertiefungen in Form von Löchern auf. Das bedeutet, dass die Vertiefungen die Gleiskette von der Radkontaktseite bis zur Bodenkontaktseite durchdringen. Die Ausbildung der Vertiefungen in Form von Löchern hat den Vorteil, dass relativ groß oder hoch ausgestaltete Antriebsnasen des Antriebsrades besonders tief in die ebene Fläche auf der inneren Radkontaktseite der Gleiskette eingreifen können. Dies ist insbesondere beim Anfahren und starken Beschleunigen des Gleiskettenfahrzeugs von Vorteil, da durch einen solchen tiefen Eingriff ein hohes Drehmoment vom Antriebsrad auf die Gleiskette übertragen werden kann.

Es kann aber auch vorteilhaft sein, wenn die Gleiskette nur Vertiefungen aufweist, welche von der Radkontaktseite nicht bis zur Bodenkontaktseite durchdringen. Dies hat den Vorteil einer hohen Strukturfestigkeit der Gleiskette. Besonders vorteilhaft ist es jedoch, wenn die Gleiskette sowohl Vertiefungen in Form von Löchern aufweist als auch Vertiefungen aufweist, welche von der Radkontaktseite nicht bis zur Bodenkontaktseite durchdringen. Dadurch kann sowohl eine hohe Drehmomentübertragung als auch eine hohe strukturelle Festigkeit der Gleiskette erreicht werden. Ferner unterstützen die nicht durchdringenden Vertiefungen in Verbindung mit kleineren oder niedrigeren Antriebsnasen des Antriebsrades gerade bei schnellerer Fahrt (ohne größere Beschleunigungen) in wirkungsvoller Weise den Vortrieb des Gleiskettenfahrzeugs. Die nicht bis zur Bodenkontaktseite durchdringenden Vertiefungen weisen die Form von Kanälen auf, welche zumindest eine Richtungskomponente senkrecht zur Längsachse der Gleiskette aufweisen. Erfindungsgemäß sind die Kanäle senkrecht zur Längsachse der Gleiskette orientiert sind, da in diesem Fall die Kraftübertragung auf die Gleiskette maximal ist.

Erfindungsgemäß sind die Kanäle zwischen den Führungshörnern hindurch über die gesamte Breite der Gleiskette verlaufen. Dadurch kann zum einen über entsprechend breite, in die Kanäle eingreifende Antriebsnasen des Antriebsrades die Antriebskraft auf die gesamte Breite der Gleiskette verteilt werden, was gerade beim Anfahren und Beschleunigen zur Schlupfvermeidung beiträgt. Zum anderen wird darüber hinaus aber auch noch eine andere positive Synergiewirkung erzielt, denn im Bereich der Kanäle wird die Gleiskette dünner, was zu einer leichteren Biegbarkeit der Gleiskette im Bereich der Kanäle führt. Dadurch kann die Gleiskette ohne großen Widerstand leichter über das Antriebsrad und das Spannrad laufen, wo der Umlenkwinkel der Gleiskette am größten ist.

Gemäß einer besonders bevorzugten Ausführungsform der Erfindung ist/sind ein oder mehrere Löcher auf Höhe des Zwischenraums zwischen zwei Führungshörnern auf der einen Seite neben der Mittellängsachse der Gleiskette über einen der oben beschriebenen Kanäle mit einem oder mehreren Löchern auf Höhe des Zwischenraums zwischen diesen zwei Führungshörnern auf der anderen Seite neben der Mittellängsachse der Gleiskette verbunden. Dadurch, dass die Löcher mit den Kanälen auf einer Linie liegen, wird die Biegsamkeit der Kette in diesem Bereich noch weiter erhöht, so dass sich neben der hohen Agilität der Gleiskette aufgrund Gewichtseinsparung auch eine optimale Abrollbarkeit der Gleiskette über Antriebsrad und Spannrolle ergeben.

Die Gleiskette ist im Wesentlichen aus Polymer, vorzugsweise aus elastischen Materialien wie Kautschuk und/oder anderen Elastomeren hergestellt. Zur strukturellen Verstärkung der Gleiskette oder deren Segmente sind vorzugsweise Einlagen aus Metall und/oder Gewebe eingearbeitet.

Vorzugsweise sind zwischen den Löchern parallel zur Mittellängsachse der Gleiskette Metallbänder in die ebene Fläche und in die Lochwandung eingearbeitet. Durch diese Maßnahme kann die Standzeit der erfindungsgemäßen Gleiskette signifikant erhöht werden, da die Belastung der Oberflächen im Eingriffsbereich der längeren, in die Löcher eingreifenden Antriebsnasen des Antriebsrades aufgrund der besonders starken Drehmomentbelastung besonders hoch ist.

Auf der äußeren Bodenkontaktseite der Gleiskette sind vorzugsweise Laufnocken oder Laufrippen angeordnet, welche je nach Form für die Traktion zwischen Gleiskette und Untergrund und/oder zur Schonung der Untergrundoberfläche (Fahrbahn) optimiert sein können.

Gemäß einer weiteren bevorzugten Ausführungsform der vorliegenden Erfindung ist die zur Fahrzeuglängsachse hinweisende seitliche Flanke der Führungshörner im oberen Bereich vorne und/oder hinten abgeschrägt. Dadurch kann die Tendenz der Gleiskette abzuspringen, wenn Querkräfte auf die Laufräder wirken (also insbesondere bei schneller Kurvenfahrt), verringert werden.

Weitere vorteilhafte Ausführungsformen und Verbesserungen der Erfindung ergeben sich aus nachstehender Beschreibung von bevorzugten Realisierungsbeispielen der Erfindung.
Nachstehend wird die Erfindung anhand ihrer vorteilhaften Ausführungsformen unter Bezugnahme auf die Zeichnungen näher erläutert.

In den Zeichnungen zeigen:
- Figur 1: eine Draufsicht auf eine bevorzugte Ausführungsform eines Gleiskettensegments gemäß der Erfindung,
- Figur 2: eine Unteransicht des in Figur 1 dargestellten Gleiskettensegments,
- Figur 3: eine Schnittansicht des in Figur 1 dargestellten Gleiskettensegments entlang der in Figur 1 dargestellten Schnittlinie C-C,
- Figur 4: eine Schnittansicht des in Figur 1 dargestellten Gleiskettensegments entlang der in Figur 1 dargestellten Schnittlinie B-B,
- Figur 5: eine Schnittansicht des in Figur 1 dargestellten Gleiskettensegments entlang der in Figur 1 dargestellten Schnittlinie bzw. teilweisen Seitenansichtslinie A-A,
- Figur 6: eine Schnittansicht des in Figur 1 dargestellten Gleiskettensegments entlang der in Figur 1 dargestellten Schnittlinie D-D,
- Figur 7: eine Schnittansicht des in Figur 1 dargestellten Gleiskettensegments entlang der in Figur 1 dargestellten Schnittlinie E-E, und
- Figur 8: eine Seitenansicht des Einsatzes einer erfindungsgemäßen Gleiskette an einem Gleiskettenfahrzeug mit Antriebsrad, Laufrädern und Spannrolle.

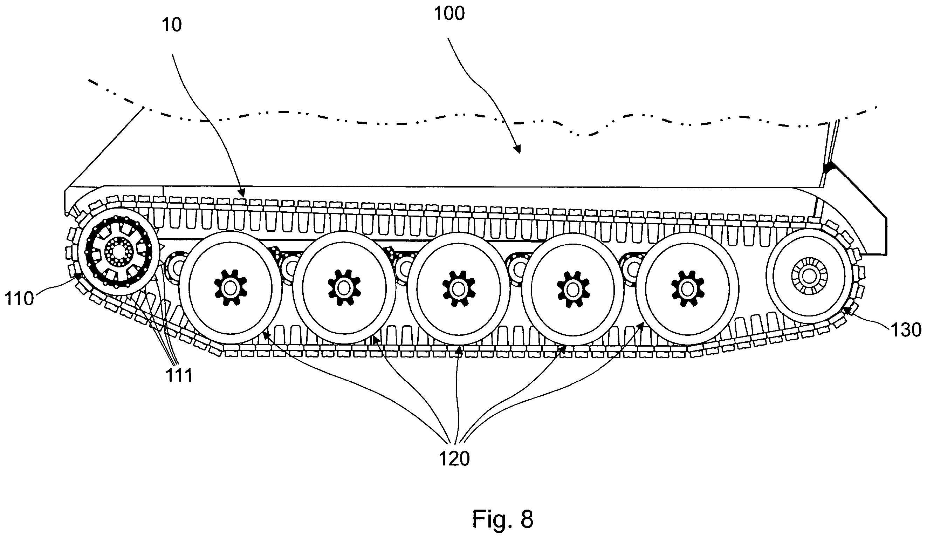

Figur 8 zeigt eine erfindungsgemäße Gleiskette 10 im Einsatz an einem Gleiskettenfahrzeug 100. Die Gleiskette 10 ist dazu eingerichtet, über ein Antriebsrad 110, über Laufräder 120 und ein Spannrad 130 zu laufen.

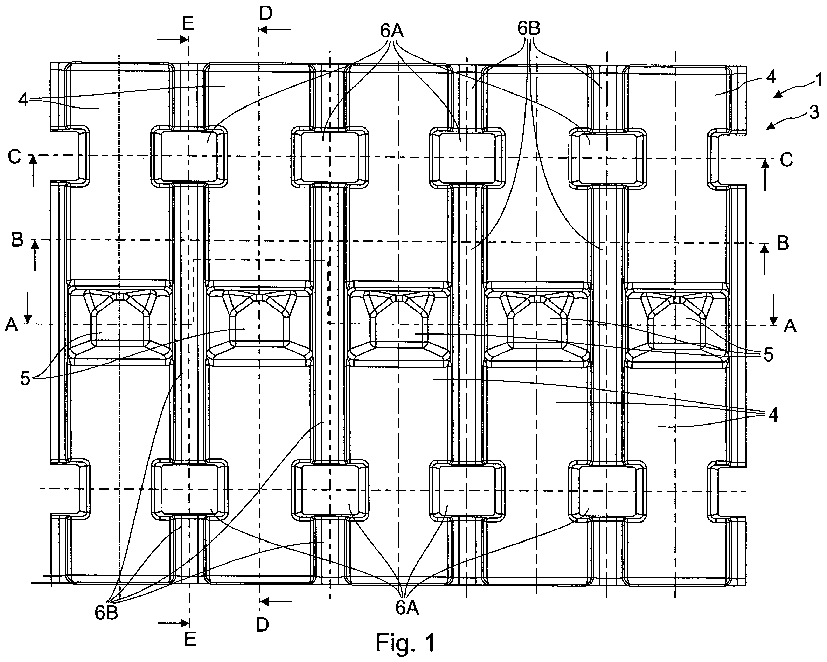

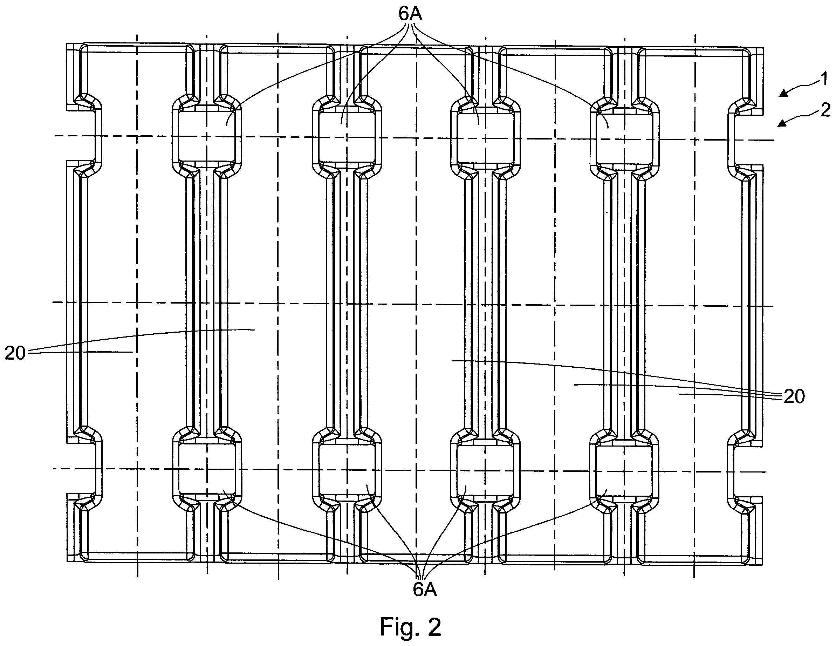

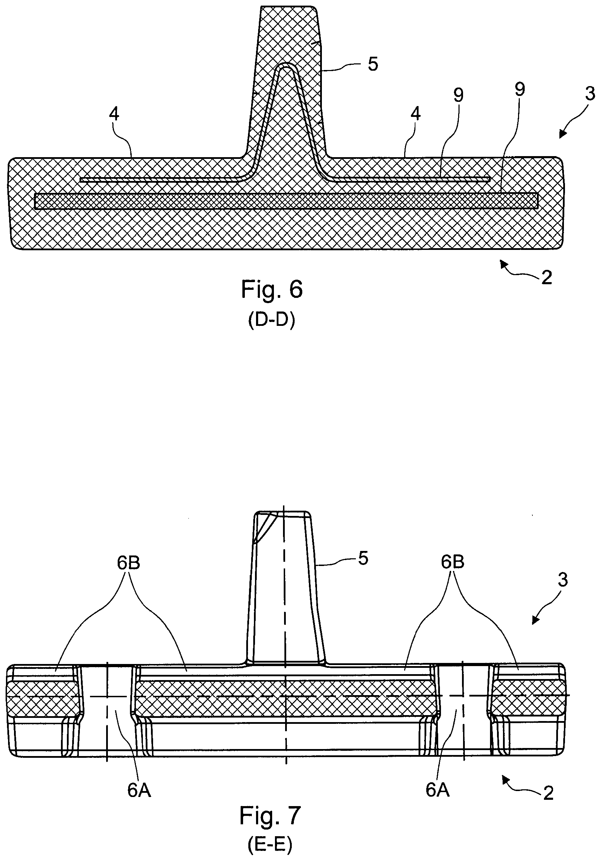

Wie den verschiedenen Ansichten und Schnittansichten der Figuren 1 bis 7 zu entnehmen ist, weist die Gleiskette 10 oder das Gleiskettensegment 1 eine äußere Bodenkontaktseite 2 und eine innere Radkontaktseite 3 auf. Die innere Radkontaktseite 3 weist eine ebene Fläche 4 auf, aus der mehrere Führungshörner 5 zur Führung der Gleiskette 10 oder des Gleiskettensegments 1 während der Bewegung des Gleiskettenfahrzeugs 100 herausragen. Zumindest Teile der ebenen Fläche 4 dienen als Lauffläche für die Laufräder 120. In der ebenen Fläche 4 sind Vertiefungen 6; 6a, 6b für den Eingriff von Antriebsnasen 111 des Antriebsrades 110 vorgesehen.

Die Führungshörner 5 sind auf der Mittellängsachse der Gleiskette 10 oder des Gleiskettensegments 1 angeordnet. Die ebene Fläche 4 erstreckt sich über die gesamte Breite der Gleiskette 10 bzw. des Gleiskettensegments 1.

Das Gleiskettensegment 1 der Figuren 1 bis 7 weist Vertiefungen in Form von Löchern 6A auf, welche das Gleiskettensegment 1 von der Radkontaktseite 3 bis zur Bodenkontaktseite 2 durchdringen. Die Löcher 6A weisen in der Draufsicht einen im Wesentlichen rechteckigen Querschnitt auf. Die senkrecht zur Mittellängsachse des Gleiskettensegments 1 verlaufenden Lochränder sind angeschrägt, so dass die Antriebsnasen 111 des Antriebsrades 110 während des Abrollvorganges des Gleiskettensegments 1 am Antriebsrad 110 in die Löcher 6A eingreifen können.

Ferner weist das Gleiskettensegment 1 Vertiefungen 6B auf, welche von der Radkontaktseite 3 nicht bis zur Bodenkontaktseite 2 durchdringen. Diese Vertiefungen 6B weisen die Form von Kanälen auf, welche senkrecht zur Längsachse des Gleiskettensegments 1 orientiert sind. Die Kanäle 6B verlaufen zwischen den Führungshörnern 5 hindurch über die gesamte Breite des Gleiskettensegments 1. Dabei ist jeweils ein Loch 6A auf Höhe des Zwischenraums zwischen zwei Führungshörnern 5 auf der einen Seite neben der Mittellängsachse des Gleiskettensegments 1 über einen Kanal 6B mit jeweils einem Loch 6A auf Höhe des Zwischenraums zwischen diesen zwei Führungshörnern 5 auf der anderen Seite neben der Mittellängsachse des Gleiskettensegments 1 verbunden. Es ist aber auch möglich, dass zwei oder mehr Löcher 6A auf Höhe des Zwischenraums zwischen zwei Führungshörnern 5 auf einer Seite neben der Mittellängsachse des Gleiskettensegments 1 angeordnet sind und diese Löcher 6A in einer Flucht mit dem Kanal 6B liegen. Ferner ist es auch möglich, dass die Löcher 6A nicht auf Höhe des Zwischenraums zwischen zwei Führungshörnern 5 liegen, sondern zwischen den Kanälen 6B auf Höhe der Führungshörner 5 angeordnet sind. Es ist auch eine Kombination dieser beiden Anordnungsmöglichkeiten der Löcher 6A möglich, wobei es dann von Vorteil ist, wenn die Löcher 6A auf Höhe der Zwischenräume zwischen zwei Führungshörnern 5 und die Löcher 6A auf Höhe der Führungshörner 5 seitlich zueinander versetzt angeordnet sind.

Auf der äußeren Bodenkontaktseite 2 sind Laufrippen 20 angeordnet, welche zur Traktionsverbesserung und/oder Untergrundoberflächenschonung optimiert sind. Das Gleiskettensegment 1 ist im Wesentlichen aus Polymer, vorzugsweise aus elastischen Materialien wie Kautschuk und/oder anderen Elastomeren hergestellt. In das Gleiskettensegment 1 sind zur strukturellen Verstärkung Einlagen 9 aus Metall und/oder Gewebe eingearbeitet. Die Einlagen bzw. Verstärkungsmittel 9 können die Form von Kabeln, Fasern, Blechen und/oder anderen Formteilen aufweisen.

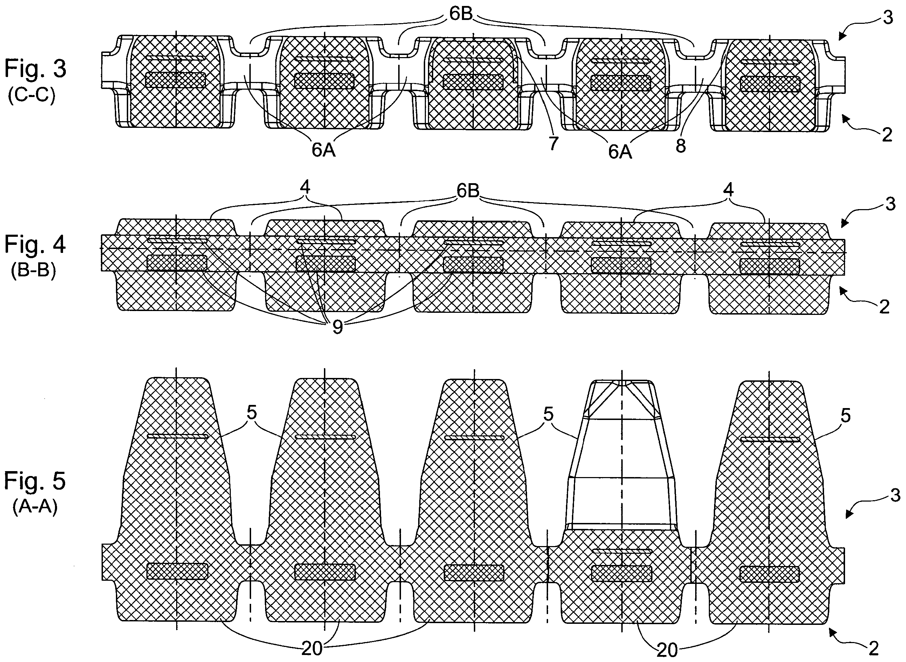

Wie in Figur 3 in der Mitte exemplarisch dargestellt, können zwischen den Löcher 6A parallel zur Mittellängsachse des Gleiskettensegments 1 Metallbänder 7 in die ebene Fläche 4 und in die Lochwandung 8 eingearbeitet sein.

Wie den Figuren 1 und 5 zu entnehmen ist, kann die zur Fahrzeuglängsachse hinweisende seitliche Flanke der Führungshörner 5 im oberen Bereich vorne und/oder hinten abgeschrägt sein.

Die oben beschriebenen Kanäle können, aber müssen nicht vollständig für den Antrieb benützt werden, sowohl was die Anzahl der Kanäle als auch deren Länge anbelangt. So können einzelne Kanäle komplett aus dem Antriebskonzept herausgelassen werden, bei anderen Kanälen wiederum kann z. B. nur der innere Teil (zwischen Loch 6A und Führungshorn 5) oder nur der äußere Teil (vom Loch 6A hin zum äußeren Rand des Gleiskettensegments 1) zum Antrieb verwendet werden.

Auch wenn die vorliegende Erfindung nicht auf den vollständigen Verzicht auf Traktionsnasen auf der inneren Radkontaktseite 3 der Gleiskette 10 beschränkt ist, so bleibt doch festzustellen, dass die erfindungsgemäße Gleiskette 10 bzw. das erfindungsgemäße Gleiskettensegment 1 auch ohne jegliche Traktionsnasen oder andere Vorsprünge aus der Lauffläche auskommt.

### Bezugszeichenliste

- 1: Gleiskettensegment
- 2: äußere Bodenkontaktseite (von 1)
- 3: innere Radkontaktseite (von 1)
- 4: ebene Fläche (von 3)
- 5: Führungshorn
- 6: Vertiefung (in 4)
- 6A: Loch
- 6B: Kanal
- 7: Metallband
- 8: Lochwandung (von 6A)
- 9: Einlage
- 10: Gleiskette
- 20: Laufnocke oder Laufrippe
- 100: Gleiskettenfahrzeug
- 110: Antriebsrad
- 111: Antriebsnase (von 110)
- 120: Laufrad
- 130: Spannrad

## Patentansprüche

1. Gleiskette (10) oder Gleiskettensegment (1) für ein Gleiskettenfahrzeug (100), welche oder welches geeignet ist, über ein Antriebsrad (110) und über Laufräder (120) zu laufen,
wobei die Gleiskette oder das Gleiskettensegment eine äußere Bodenkontaktseite (2) und eine innere Radkontaktseite (3) aufweist, wobei die innere Radkontaktseite (3) eine ebene Fläche (4) aufweist, aus der mehrere Führungshörner (5) zur Führung der Gleiskette oder des Gleiskettensegments während der Bewegung des Gleiskettenfahrzeugs herausragen,
wobei zumindest Teile der ebenen Fläche (4) als Lauffläche für die Laufräder (120) dienen,
wobei in der ebenen Fläche (4) Vertiefungen (6; 6A, 6B) für den Eingriff von Antriebsnasen (111) des Antriebsrades (110) vorgesehen sind, wobei die Gleiskette oder das Gleiskettensegment Vertiefungen (6B) aufweist, welche von der Radkontaktseite (3) nicht bis zur Bodenkontaktseite (2) durchdringen,
wobei diese Vertiefungen (6B) die Form von Kanälen aufweisen, welche senkrecht zur Längsachse der Gleiskette oder des Gleiskettensegments orientiert sind,
**dadurch gekennzeichnet,**
**dass** die Kanäle (6B) zwischen den Führungshörnern (5) hindurch über die gesamte Breite der Gleiskette oder des Gleiskettensegments verlaufen.

2. Gleiskette oder Gleiskettensegment nach Anspruch 1,
wobei die Führungshörner (5) auf der Mittellängsachse der Gleiskette oder des Gleiskettensegments angeordnet sind.

3. Gleiskette oder Gleiskettensegment nach einem der vorhergehenden Ansprüche,
wobei sich-die ebene Fläche (4) über die gesamte Breite der Gleiskette oder des Gleiskettensegments erstreckt.

4. Gleiskette oder Gleiskettensegment nach einem der vorhergehenden Ansprüche,
wobei die Gleiskette oder das Gleiskettensegment Vertiefungen in Form von Löchern (6A) aufweist, welche die Gleiskette oder das Gleiskettensegment von der Radkontaktseite (3) bis zur Bodenkontaktseite (2) durchdringen.

5. Gleiskette oder Gleiskettensegment nach Anspruch 4,
wobei ein oder mehrere Löcher (6A) auf Höhe des Zwischenraums zwischen zwei Führungshörnern (5) auf der einen Seite neben der Mittellängsachse der Gleiskette oder des Gleiskettensegments über einen der Kanäle (6B) mit einem oder mehreren Löchern (6A) auf Höhe des Zwischenraums zwischen diesen zwei Führungshörnern (5) auf der anderen Seite neben der Mittellängsachse der Gleiskette oder des Gleiskettensegments verbunden sind.

6. Gleiskette oder Gleiskettensegment nach einem der vorhergehenden Ansprüche,
wobei die Gleiskette oder das Gleiskettensegment im Wesentlichen aus Polymer, vorzugsweise aus elastischen Materialien wie Kautschuk und/oder anderen Elastomeren, hergestellt ist, in welche vorzugsweise zur strukturellen Verstärkung Einlagen (9) aus Metall und/oder Gewebe eingearbeitet sind.

7. Gleiskette oder Gleiskettensegment nach Anspruch 5, wobei zwischen den Löchern (6A) parallel zur Mittellängsachse der Gleiskette oder des Gleiskettensegments Metallbänder (7) in die ebene Fläche (4) und in die Lochwandung (8) eingearbeitet sind.

8. Gleiskette oder Gleiskettensegment nach einem der vorhergehenden Ansprüche,
wobei auf der äußeren Bodenkontaktseite (2) Laufnocken oder Laufrippen (20) angeordnet sind.

9. Gleiskette oder Gleiskettensegment nach einem der vorhergehenden Ansprüche,
wobei die zur Fahrzeuglängsachse hinweisende seitliche Flanke der Führungshörner (5) im oberen Bereich vorne und/oder hinten abgeschrägt ist.

## Claims

1. Crawler track (10) or crawler track segment (1) for a crawler tracked vehicle (100) which is suitable for running via a drive wheel (110) and via bogie wheels (120),
wherein the crawler track or the crawler track segment has an outer ground contact side (2) and an inner wheel contact side (3), wherein the inner wheel contact side (3) exhibits a flat surface (4), from which a plurality of guide horns (5) projects to guide the crawler track or the crawler track segment during the movement of the crawler tracked vehicle, wherein at least parts of the flat surface (4) serve as the running surface for the bogie wheels (120),
wherein, in the flat surface (4), cavities (6, 6a, 6b) are provided for the engagement of drive pegs (111) of the drive wheel (110),
wherein the crawler track or crawler track segment exhibits cavities (6B) that do not penetrate as far as the ground contact side (2) from the wheel contact side (3),
wherein these cavities (6B) are in the form of channels which are oriented perpendicular to the longitudinal axis of the crawler track or the crawler track segment,
**characterized**
**in that** the channels (6B) extend between the guide horns (5) over the entire width of the crawler track or crawler track segment.

2. Crawler track or crawler track segment according to Claim 1,
wherein the guide horns (5) are arranged on the central longitudinal axis of the crawler track or of the crawler track segment.

3. Crawler track or crawler track segment according to one of the preceding claims,
wherein the flat surface (4) extends over the entire width of the crawler track or of the crawler track segment.

4. Crawler track or crawler track segment according to one of the preceding claims,
wherein the crawler track or crawler track segment exhibits cavities in the form of holes (6A) which penetrate the crawler track or the crawler track segment from the wheel contact side (3) as far as the ground contact side (2).

5. Crawler track or crawler track segment according to Claim 4,
wherein one or a plurality of holes (6A) is/are connected at the level of the gap between two guide horns (5) on the one side alongside the central longitudinal axis of the crawler track or crawler track segment via one of the channels (6B) to one or a plurality of holes (6A) at the level of the gap between these two guide horns (5) on the other side alongside the central longitudinal axis of the crawler track or the crawler track segment.

6. Crawler track or crawler track segment according to one of the preceding claims,
wherein the crawler track or crawler track segment is produced substantially of polymer, preferably elastic materials such as rubber and/or other elastomers, in which inserts (9) made of metal and/or fabric are preferably incorporated for structural reinforcement.

7. Crawler track or crawler track segment according to Claim 5,
wherein metal strips (7) are incorporated into the flat surface (4) and into the perforated wall (8) between the holes (6A) parallel to the central longitudinal axis of the crawler track or the crawler track segment.

8. Crawler track or crawler track segment according to one of the preceding claims,
wherein running cams or running ribs (20) are arranged on the outer ground contact side (2).

9. Crawler track or crawler track segment according to one of the preceding claims,
wherein the lateral side of the guide horns (5) pointing to the longitudinal axis of the vehicle is chamfered in the upper region at the front and/or back.

## Revendications

1. Chenille (10) ou segment de chenille (1) pour un véhicule à chenille (100), qui est adapté(e) pour rouler sur une roue d'entraînement (110) et sur des roues de roulement (120),
la chenille ou le segment de chenille présentant un côté extérieur en contact avec le sol (2) et un côté intérieur en contact avec la roue (3), le côté intérieur en contact avec la roue (3) présentant une surface plane (4) depuis laquelle font saillie plusieurs cornes de guidage (5) pour le guidage de la chenille ou du segment de chenille pendant le déplacement du véhicule à chenille,
au moins certaines parties de la surface plane (4) servant de surface de roulement pour les roues de roulement (120),
des renfoncements (6 ; 6A, 6B) pour l'engagement d'ergots d'entraînement (111) de la roue d'entraînement (110) étant prévus dans la surface plane (4),
la chenille ou le segment de chenille présentant des renfoncements (6B) qui ne traversent pas depuis le côté en contact avec la roue (3) jusqu'au côté en contact avec le sol (2),
ces renfoncements (6B) présentant la forme de canaux qui sont orientés perpendiculairement à l'axe longitudinal de la chenille ou du segment de chenille,
caractérisé(e) en ce que
les canaux (6B) s'étendent entre et à travers les cornes de guidage (5) sur toute la largeur de la chenille ou du segment de chenille.

2. Chenille ou segment de chenille selon la revendication 1,
dans lequel ou laquelle les cornes de guidage (5) sont disposées sur l'axe médian longitudinal de la chenille ou du segment de chenille.

3. Chenille ou segment de chenille selon l'une quelconque des revendications précédentes,
dans lequel ou laquelle la surface plane (4) s'étend sur toute la largeur de la chenille ou du segment de chenille.

4. Chenille ou segment de chenille selon l'une quelconque des revendications précédentes,
la chenille ou le segment de chenille présentant des renfoncements en forme de trous (6A) qui traversent la chenille ou le segment de chenille depuis le côté en contact avec la roue (3) jusqu'au côté en contact avec le sol (2).

5. Chenille ou segment de chenille selon la revendication 4,
dans lequel ou laquelle un ou plusieurs trous (6A) sont reliés, à la hauteur de l'espace intermédiaire entre deux cornes de guidage (5) sur l'un des côtés à côté de l'axe médian longitudinal de la chenille ou du segment de chenille par le biais de l'un des canaux (6B), à un ou plusieurs trous (6A) à la hauteur de l'espace intermédiaire entre ces deux cornes de guidage (5) de l'autre côté à côté de l'axe médian longitudinal de la chenille ou du segment de chenille.

6. Chenille ou segment de chenille selon l'une quelconque des revendications précédentes,
la chenille ou le segment de chenille étant fabriqué(e) essentiellement en polymère, de préférence en matériaux élastiques tel que du caoutchouc et/ou d'autres élastomères, dans lesquels de préférence sont incorporés, en vue d'un renforcement structurel, des inserts (9) en métal et/ou en tissu.

7. Chenille ou segment de chenille selon la revendication 5,
dans lequel ou laquelle, des bandes métalliques (7) sont incorporées entre les trous (6A), dans la surface plane (4) et dans la paroi à trous (8) parallèlement à l'axe médian longitudinal de la chenille ou du segment de chenille.

8. Chenille ou segment de chenille selon l'une quelconque des revendications précédentes,
dans lequel ou laquelle des cames de roulement ou des ailettes de roulement (20) sont disposées sur le côté extérieur en contact avec le sol (2).

9. Chenille ou segment de chenille selon l'une quelconque des revendications précédentes,
dans lequel ou laquelle le flanc latéral des cornes de guidage (5), tourné vers l'axe longitudinal du véhicule, est biseauté à l'avant et/ou à l'arrière dans la région supérieure.
